# EUROPEAN PATENT APPLICATION

(11) **EP 2 388 995 A2**
(43) Date of publication of application: **23.11.2011**
(21) Application number: 11150179.7
(22) Date of filing: 05.01.2011
(51) Int. Cl.: H04N 5/781, H04N 21/4335, H04N 21/458, H04N 21/488, H04N 21/4147

(54) **Recorder, recording method and video display apparatus**

(30) Priority: 19.05.2010 JP 2010115440
(71) Applicant: Kabushiki Kaisha Toshiba, Minato-ku Tokyo (JP)
(72) Inventor: Yamashita, Michio, Tokyo (JP); Mori, Takashi, Tokyo (JP); Nishida, Chiaki, Tokyo (JP)
(74) Representative: HOFFMANN EITLE

(57) **Abstract**

According to one embodiment, a recorder for recording broadcast programs is provided. The recorder includes: a first video recording module which simultaneously receives video signals of a plurality of broadcast programs, and continuously records the video signals on a recording medium; a second video recording module which extracts a designated specific program from the plurality of broadcast programs based on a schedule, and re-records the specific program on the recording medium; and a load forecasting module which forecasts a timing of load of an operation of the recorder. Re-recording of the specific program is performed based on the forecasted load timing of the recorder.

## Description

### FIELD

The present invention relates to a recorder that simultaneously receives and records plural broadcast programs, and relates to a recording method thereof and a video display apparatus.

### BACKGROUND

There is a practical application of a video display apparatus provided with a function (full recording) that simultaneously receives plural broadcast programs and continuously records the received plural broadcast programs on a storage device, such as an HDD.

However, due to storage devices only having finite capacity, even though full recording of video images is performed, processing is required to record new programs while erasing video data recorded some time ago. Therefore, a particular program recorded on the storage device might be erased after a certain period of time has elapsed.

A need thus arises for a user to instigate re-recording of a particular program prior to the auto-recorded video being erased, and load on the recorder needs to be considered in order to ascertain the resource of the recorder for full recording.

Complicated demands are therefore made on a user, and an improvement in usability is desired.

### SUMMARY

According to an aspect of the present invention, a recorder for recording broadcast programs is provided. The recorder includes: a first video recording module which simultaneously receives video signals of a plurality of broadcast programs, and continuously records the video signals on a recording medium; a second video recording module which extracts a designated specific program from the plurality of broadcast programs based on a schedule, and re-records the specific program on the recording medium; and a load forecasting module which forecasts a timing of load of an operation of the recorder. Re-recording of the specific program is performed based on the forecasted load timing of the recorder.

According to another aspect of the present invention, a recording method includes: simultaneously receiving video signals of a plurality of broadcast programs, and continuously recording the video signals on a recording medium; extracting a designated specific program from the plurality of broadcast programs based on a schedule, and re-recording the specific program on the recording medium; and forecasting a timing of load of an operation of the recorder. Re-recording of the specific program is performed based on the forecasted load timing of the recorder.

### BRIEF DESCRIPTION OF THE DRAWINGS

FIG. 1 is a block diagram showing a configuration of a recorder according to an exemplary embodiment;
FIG. 2 is a diagram showing an example of a recording scheduling screen output from the recorder;
FIG. 3 is a diagram showing an example display of re-recording schedule data, according to the recorder;
FIG. 4 is a graph schematically showing a relationship between initial-recording processing and re-recordable speed, according to the recorder;
FIG. 5 is a graph showing data collection directed towards constructing learning data, according to the recorder;
FIG. 6 is an explanatory diagram showing an algorithm for recording scheduling to record a specific program when, for example, all the broadcast programs received have been recorded, according to the recorder;
FIG. 7 is an explanatory diagram showing an algorithm for recording scheduling to re-record a program when, for example, initial-recording of some broadcast program(s) received has been halted, according to the recorder;
FIG. 8 is an explanatory diagram showing an algorithm for recording scheduling when, for example, programs are initial-recorded for part of the time out of 24 hours duration and not initial-recorded continuously for 24 hours from each day, according to the recorder;
FIG. 9 is an explanatory diagram showing a state when a change has occurred to the anticipated re-recording processing, for example, due to execution of other high duty processing, according to the recorder;
FIG. 10 is a flow chart showing a process for computing recording scheduling duration, according to the recorder;
FIG. 11 is a flow chart showing an algorithm for reconstructing a recording schedule when a change in load on the recorder is expected, according to the recorder; and
FIG. 12 is a diagram showing an external appearance of a television installed with the recorder.

### DETAILED DESCRIPTION OF THE EMBODIMENTS

Explanation follows regarding an exemplary embodiment, with reference to the drawings.

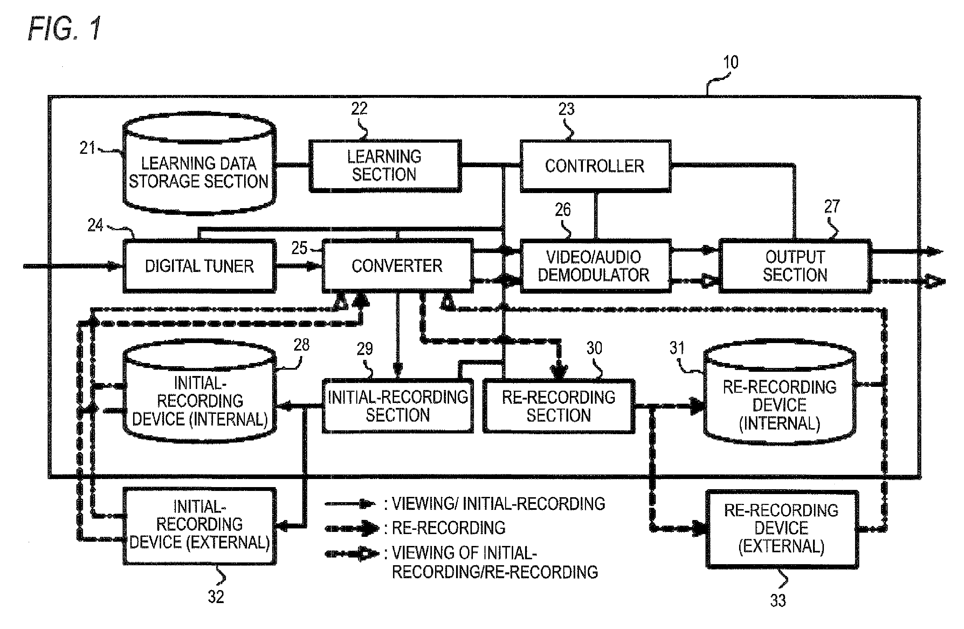

FIG. 1 is a flow chart showing a configuration of a recorder according to the exemplary embodiment.

A recorder 10 includes: a learning data storage module 21 which stores data for learning the load on the recorder 10; a learning module 22 for learning the load on the recorder 10 using the learning data; and a controller 23 for controlling the recorder 10.

A digital tuner 24 receives airwaves, such as digital broadcasts, transmitted by plural broadcasting stations. A converter 25 performs format conversion and the like on video data that has been transmitted by digital broadcasting. A Video/Audio demodulator 26 demodulates the video data.

An output module 27 outputs a video signal, for example, to a display device (not shown).

An initial-recording device 28 is installed in the recorder 10 and is configured, for example, by an HDD or SSD. An initial-recording device 32 is externally attached to the recorder 10 and is also configured in a similar manner, for example, by an HDD or SSD.

An initial-recording module 29 controls full recording of plural broadcast programs, and a re-recording module 30 records a designated specific broadcast program from plural broadcast programs that have been full recorded.

Broadcast programs are thus full recorded, and designated specific broadcast program(s) is/are re-recorded from the plural broadcast programs that have been full recorded.

A re-recording device 31 is installed in the recorder 10, and a re-recording device 33 is externally attached to the recorder 10, similarly configured with, for example, an HDD or SSD.

As described below, data for learning the load on the recorder 10 is stored in the learning data storage module 21. The learning module 22 learns the load on the recorder 10 using the data stored in the learning data storage module 21.

The digital tuner 24 receives, through a non-illustrated antenna or the like, airwaves such as digital broadcasts being transmitted from plural broadcast stations and outputs to the converter 25. The converter 25 performs format conversion on the video data transmitted by digital broadcasting, and outputs to the Video/Audio demodulator 26, the initial-recording module 29, and the re-recording module 30.

The Video/Audio demodulator 26 demodulates the input video data (including audio data), and outputs to the output module 27. The output module 27 outputs a video signal and the like to a display device.

The initial-recording device (internal) 28 and the initial-recording device (external) 32 are connected to the initial-recording module 29, and perform recording for full recording.

The re-recording device (internal) 31 and the re-recording device (external) 33 are connected to the re-recording module 30, and extract a program set for recording from the programs that have been full recorded.

The controller 23 controls full recording of plural broadcast programs, controls processing to extract and re-record on a recording medium specific program(s), based on a schedule, from the plural broadcast programs that have been full recorded, and controls the timing for forecasting load of operation of the recorder.

In the exemplary embodiment, airwaves are received by the digital tuner 24, then, after passing through the converter 25 and the initial-recording module 29, initial-recording processing (full recording) is performed in the initial-recording devices 28 or 32.

Re-recording processing extracts contents designated by a schedule from the initial-recording devices 28 or 32, then, after format conversion with the converter 25, records the contents (scheduled broadcast programs) on the re-recording devices 31 or 33 via the re-recording module 30.

Initial-recording processing and re-recording processing can be processed in parallel. There are no particular limitations as to whether the initial-recording devices 28 and 32 and the re-recording devices 31 and 33 are internal or external devices. An initial-recording device (28 or 32) and a re-recording device (31 or 33) may be configured with a single device.

In the above initial-recording processing, the usable data region of the initial-recording device (28 or 32) is employed with repeated overwriting, so as to continuously record contents of plural broadcasts.

The time band(s) and broadcast station(s) for initial-recording are capable of being appropriately set and/or changed by a user.

The recorder 10 may be installed in a television.

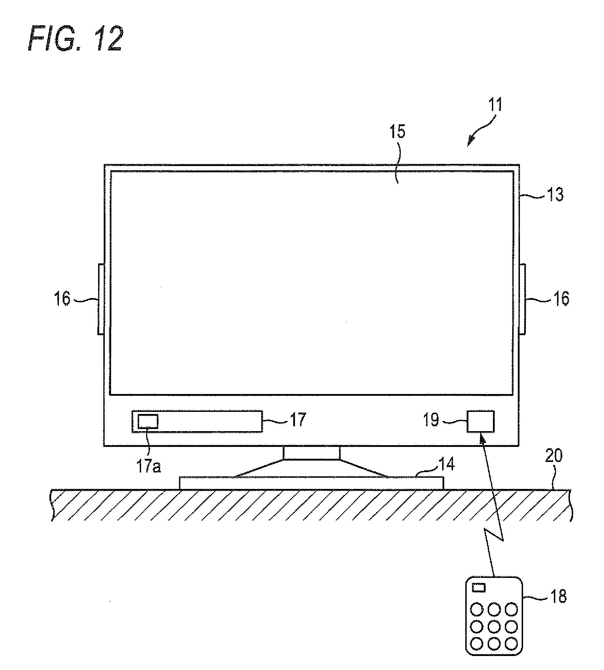

FIG. 12 is a figure showing an external appearance of a television installed with a recorder according to the present exemplary embodiment.

The recorder 10 is installed in a digital television set 11. The digital television set 11 is configured from a cabinet 13 and a support pedestal 14, supporting the cabinet 13.

A liquid crystal display panel 15 is disposed as a picture display module at a central portion on the front face of the cabinet 13. The cabinet 13 is also configured to enable stereo audio replay by speakers 16 disposed on each of the side faces of the cabinet 13.

An operation panel 17, including a main power switch 17a and a light receiver 19 for receiving operation data transmitted from a remote controller 18, is disposed at a lower portion on the front face of the cabinet 13. The support pedestal 14 is rotatably connected to a central portion on the bottom face of the cabinet 13, and the support pedestal 14 is placed on a horizontal face of a plinth 20.

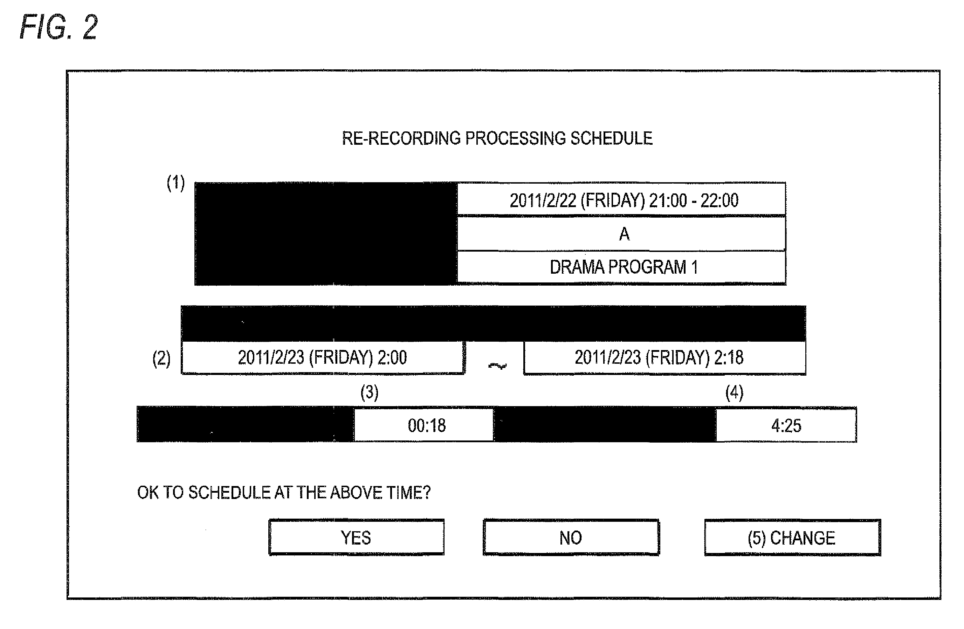

FIG. 2 is a diagram showing an example of a re-recording schedule screen output from the recorder 10 according to the exemplary embodiment.

As described above, due to recorded data by initial-recording being overwritten after a certain interval, even if broadcast programs are full recorded, there is a risk of a particular recorded program being erased after a given time period has elapsed.

However, in the exemplary embodiment, when there is some content in the programs full recording a user wishes to keep, such contents is extracted from the initial-recording device (28 or 32) according to a re-recording schedule and re-recorded on the re-recording device (31 or 33).

FIG. 2 is an example of a re-recording schedule screen for display, for example, on the liquid crystal display panel 15.

Each of the items of the re-recording schedule screen is as follows.

Column (1) shows data for recorded contents scheduled to be re-recorded.

"Date and Time of Broadcast: 2011/2/22 (Friday), 21:00 - 22:00, Broadcast Station Name: A, Name of Broadcast Program: Drama Program 1" is shown as an example of set re-recording schedule.

Column (2) shows the scheduled time when the re-recording schedule will be executed.

"2011/2/23 (Friday), 2:00 - 2011/2/23 (Friday) 2:18" is shown for when the re-recording schedule will be executed.

Column (3) shows the estimated duration required for re-recording at the scheduled time, in consideration of the expected load on the image recording apparatus 10. The calculated duration required for re-recording processing from the re-recording execution time is shown. The duration the system can use for re-recording processing is shown.

Column (4) shows the recordable duration in consideration of the remaining recording capacity for the initial-recording device (28 or 32).

A user then selects on a selection display whether it is OK to go ahead and schedule the above scheduled recording (one or other of YES or NO).

Configuration may be made such that user designation options are presented when NO is selected.

Column (5) is a user designation option. For example, configuration may be made so that the execution time of the re-recording schedule is changed to a time indicated by a user.

In such cases, the above re-recording schedule estimated duration shown is the recomputed estimated duration required for re-recording in consideration of the expected load on the image recording apparatus 10 at the modified scheduled time.

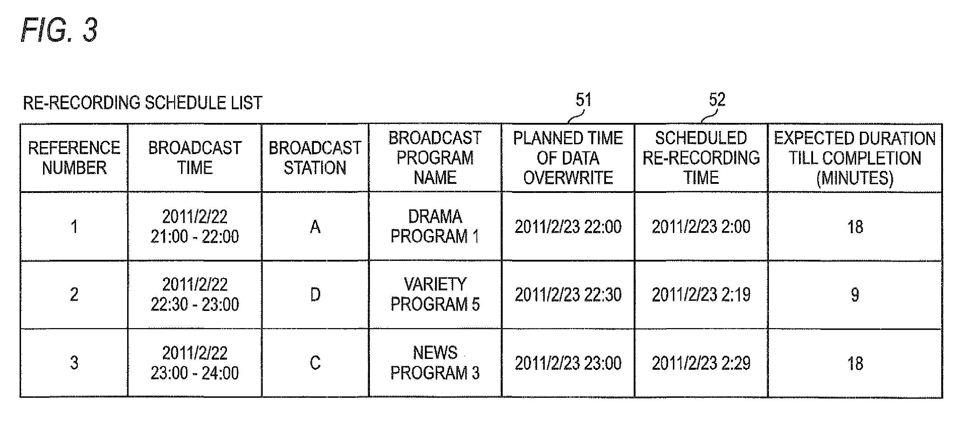

FIG. 3 is a diagram showing an example display of re-recording schedule data (re-recording schedule list) according to the recorder of the exemplary embodiment.

Data relating to the re-recording schedule is saved in the recorder 10 (for example in the controller 23).

It is possible for a user to display the data relating to the re-recording schedule saved in the recorder 10 on a display device and confirm the data.

FIG. 3 is an example of a display of a re-recording schedule list displaying data relating to the re-recording schedule in tabular format. This re-recording schedule list is displayed on a display device.

Items, including a reference number, broadcast time, broadcast station, broadcast program name, planned time of data overwriting, scheduled re-recording time, and expected duration till completion, are shown in tabular format.

A planned data overwriting time 51 is the expected timing at which the next video signal will be overwritten on the recording medium when continuously recording (full recording) to the recording medium video signals for plural broadcast programs.

The planned data overwriting time 51 is forecast by the controller 23 in consideration of the full recording operation.

A scheduled re-recording time 52 is the time assigned in the re-recording schedule estimated in the above manner.

The forecast timing of data overwriting (planned data overwriting time 51) and the timing of re-recording (scheduled re-recording time 52) are aligned with each other and output in a displayable format for display.

For example, the re-recording schedule for Reference Number 1 is "Date and Time of Broadcast: 2011/2/22 (Friday), 21:00 - 22:00, Broadcast Station Name: A, Name of Broadcast Program: Drama Program 1", the data overwriting planned time when this data will be overwritten with the next data by full recording is : 2011/2/23: 22:00, the scheduled re-recording time is: 2011/2/23: 2:00, and the scheduled duration till completion is 18 minutes.

It can be seen from this display, by comparing the planned data overwriting time 51 and the scheduled re-recording time 52, that the scheduled re-recording is planned to be executed prior to being overwritten with the next data in full recording.

The data may be configured so as to be suitably reconstructed according to the actual status of resource in the recorder 10 system. Configuration may also be made such that a user can refer to a list of completed re-recording.

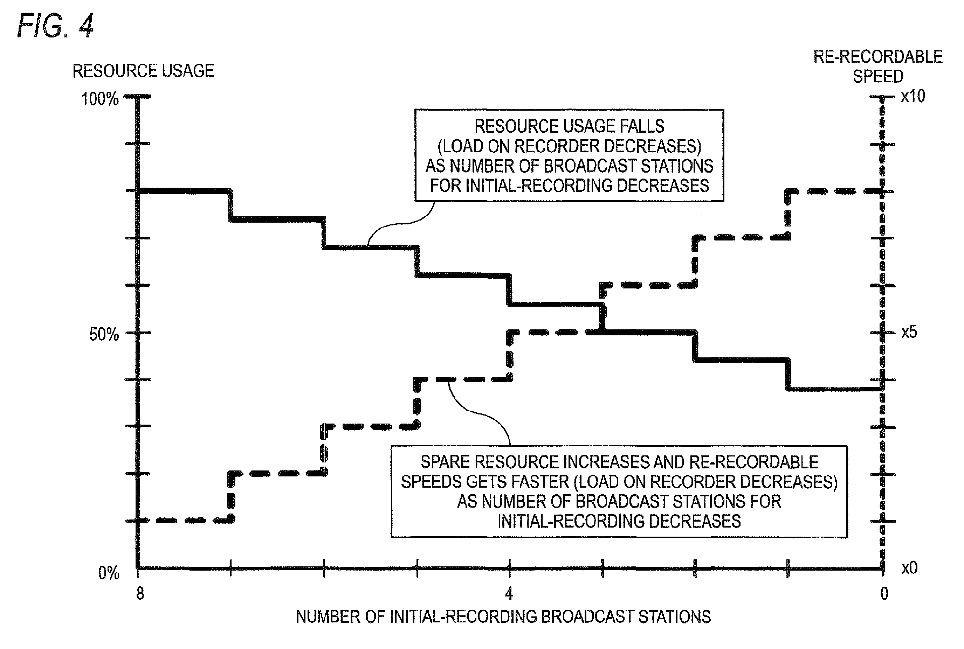

FIG. 4 is a graph schematically showing a relationship between initial-recording processing and re-recordable speed, according to the recorder of the exemplary embodiment.

As shown in FIG. 4, as the number of broadcast stations for initial-recording is reduced in the recorder 10, the resource usage of the recorder 10 system, including the controller 23, decreases. Due to the reduction in resource usage of the system, the resource allocation to re-recording processing increases. Accordingly a high re-recording speed can be employed.

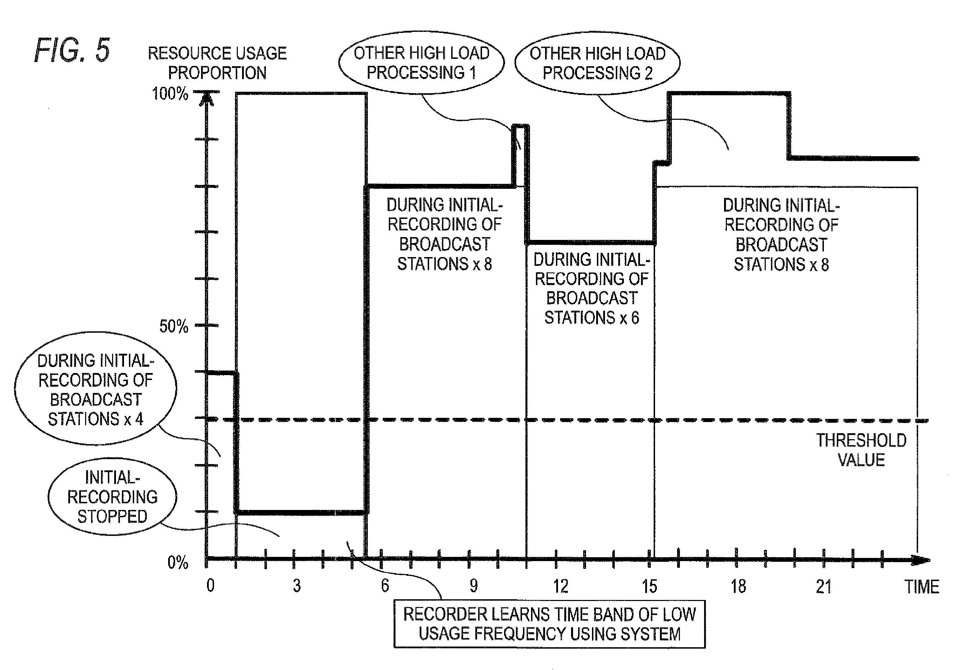

FIG. 5 is a graph showing collection of data directed towards learning data construction, according to the recorder of the exemplary embodiment.

The recorder 10 uses a time band for learning when the recorder 10 frequency of usage is low. It is determined whether frequency of usage of the recorder 10 is high or low, for example, by comparison to a pre-stored threshold value.

The derived data is, for example, stored (recorded) in the learning data storage module 21, and learnt by the learning module 22.

In the exemplary embodiment, efficient resource utilization is enabled by performing re-recording processing when the load on the image recording apparatus 10 is low.

Accordingly, data is collected for high frequencies of resource usage allocation and time bands forecast when the usage frequency should be low at a given time prior to high frequency usage. These forecast time bands are then preferably allocated to re-recording processing.

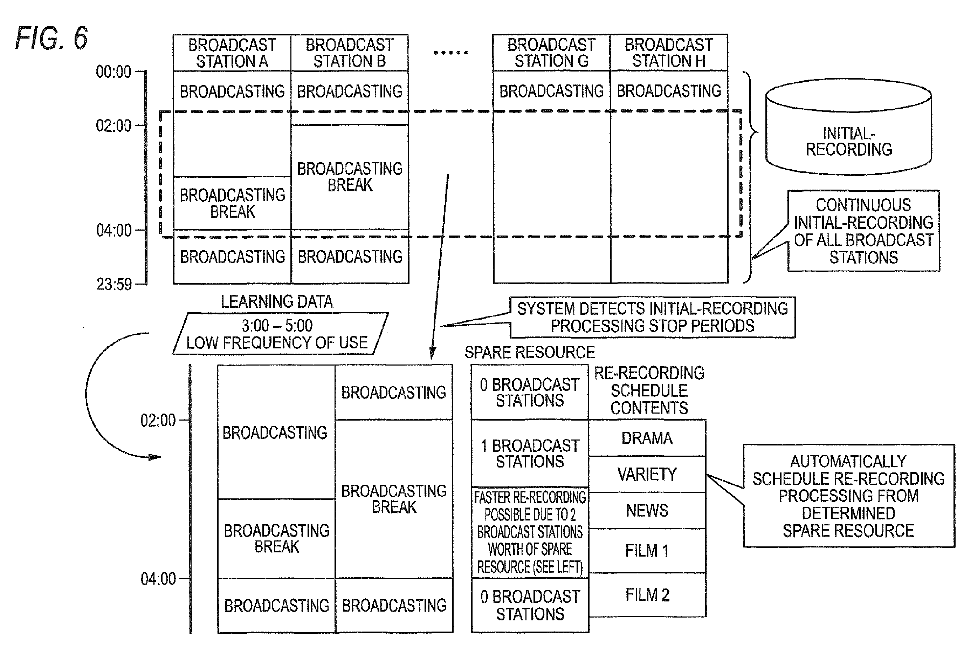

FIG. 6 is an explanatory diagram showing a recording scheduling algorithm for, for example, re-recording a specific program when programs of all received broadcast stations have been full recorded, according to the recorder of the exemplary embodiment.

The recorder 10 system forecasts, from broadcast schedule data (for example EPG data), learning data, full recording data and re-recording schedule data, times when resource can be effectively employed, for example times when there is a lot of spare resource, and schedules re-recording accordingly.

It is conceivable that there is no video content for initial-recording when a given broadcast station has a break in broadcasting. Initial-recording for the given broadcast station may be suspended in such cases.

For example, spare system resource is generated by such cessation of initial-recording.

When initial-recording is continuously performed for all broadcast stations, such as full recording, preferably periods when there is a break in broadcasting may be prioritized for re-recording.

Accordingly, it is conceivable that a greater amount of spare resource occurs in the time bands when there are a lot of breaks in broadcasting of the broadcast stations. Thus re-recording processing is possible at higher speeds.

However, recording processing is preferably performed even at low speed when there is no broadcasting break period before initial-recorded data is to be overwritten.

Configuration may be made such that times when resource utilization frequency is low are selected using the learning data and re-recording is scheduled for these times.

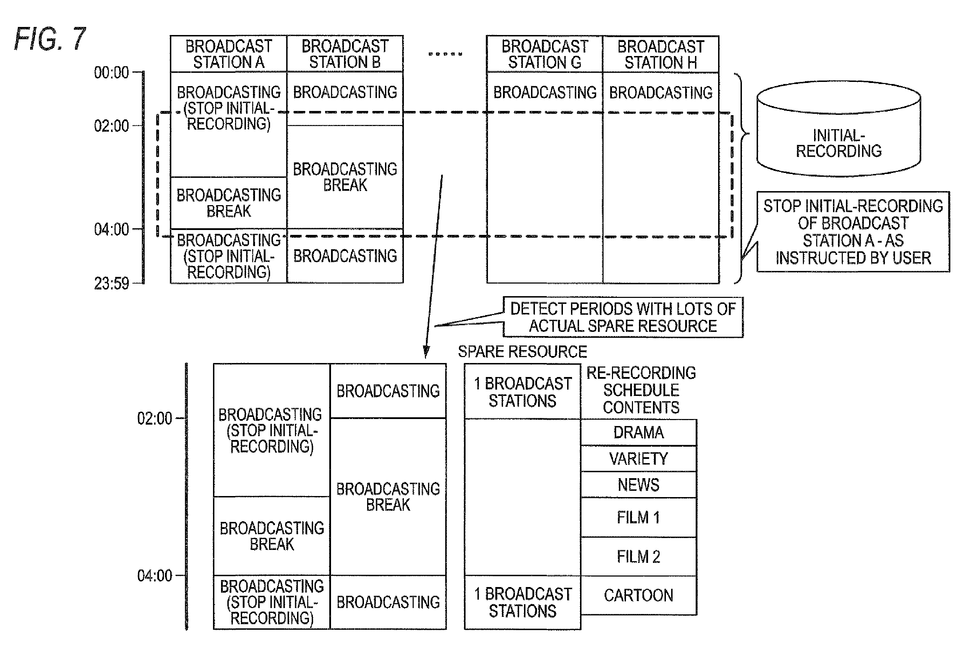

FIG. 7 is an explanatory diagram showing a re-recording scheduling algorithm for, for example, re-recording programs when initial-recording of programs for some of the received broadcast stations is stopped.

As shown in FIG. 7, configuration may be made such that re-recording processing is scheduled preferentially for periods when a lot of spare resource occurs in cases where initial-recording is stopped for some of the broadcast stations, similarly to cases where initial-recording for all of the broadcast stations is stopped, according to the recorder of the exemplary embodiment.

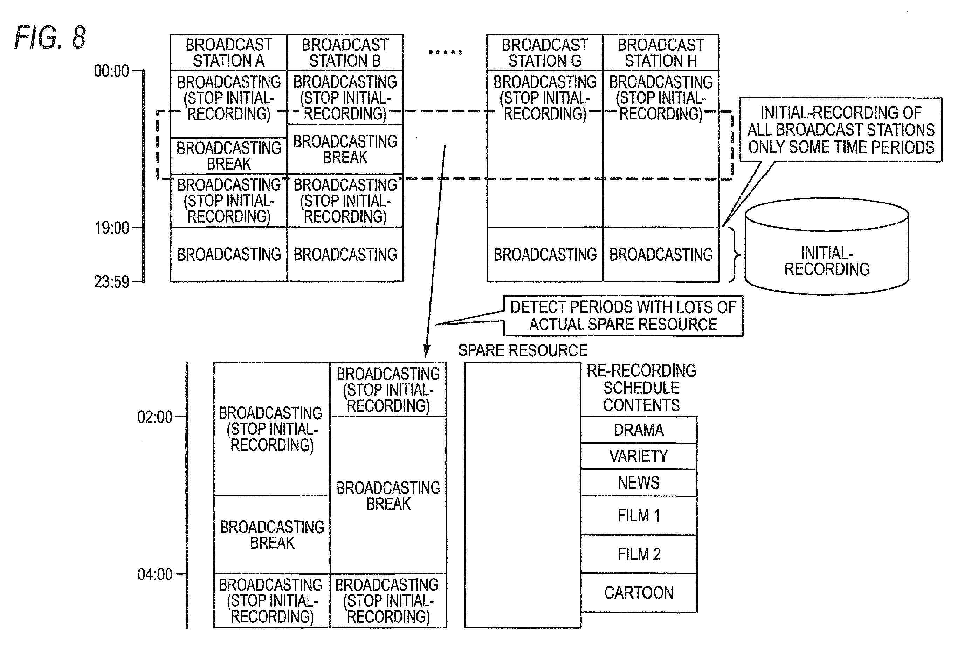

FIG. 8 is an explanatory diagram showing a re-recording scheduling algorithm when, for example, not performing initial-recording continuously for 24 hours each day but performing initial-recording of programs for part of the time out of 24 hours, according to the recorder of the exemplary embodiment.

As seen in FIG. 8, configuration may be made such that re-recording processing is scheduled preferentially for periods when a lot of spare resource occurs in cases where initial-recording is only made for a portion of time, similarly to all broadcast station initial-recording time.

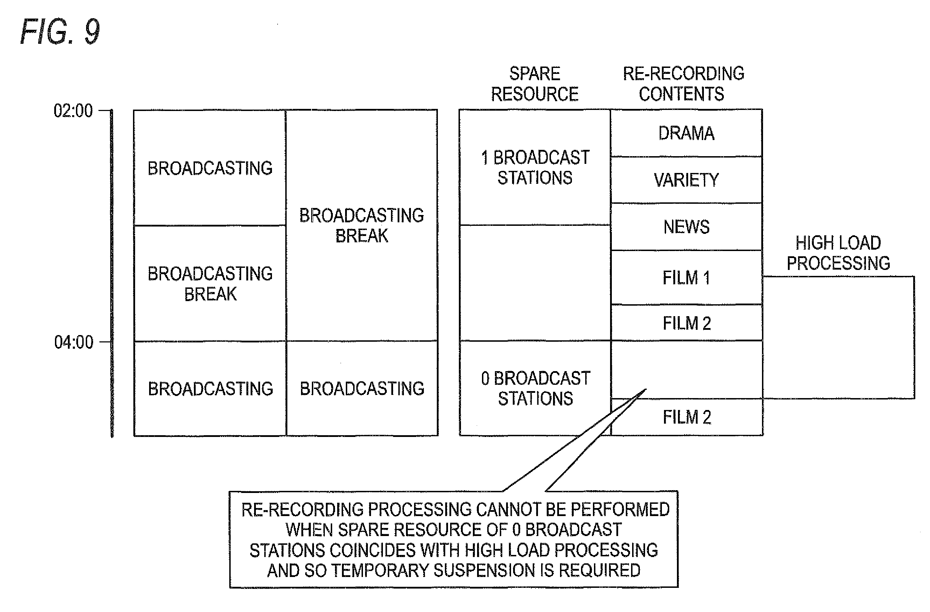

FIG. 9 is an explanatory diagram showing a state when a change has occurred to the anticipated re-recording processing, for example, due to execution of other high duty processing, in the recorder according to the exemplary embodiment.

As shown in FIG. 9, re-configuration of scheduling can be made when a change occurs in the state of spare resource due to execution of other high duty processing during re-recording processing (for example viewing of a video via the Internet, starting recording by a personal video recorder (PVR), or the like).

Recording processing can also be temporarily suspended when spare resource reduces to an extent at which re-recording processing execution is not possible due to other processing.

Configuration may be made such that when this occurs, re-recording processing is first interrupted, information regarding whether to perform the other high duty processing is provided to a user who is then required to choose.

Configuration may be made such that when re-configuration of scheduling is made, a user is notified that changes have occurred, for example, that a change has occurred to the re-recording processing time due to re-configuration of the scheduling, or that a change has occurred to the processing completion time due to re-configuration of the scheduling.

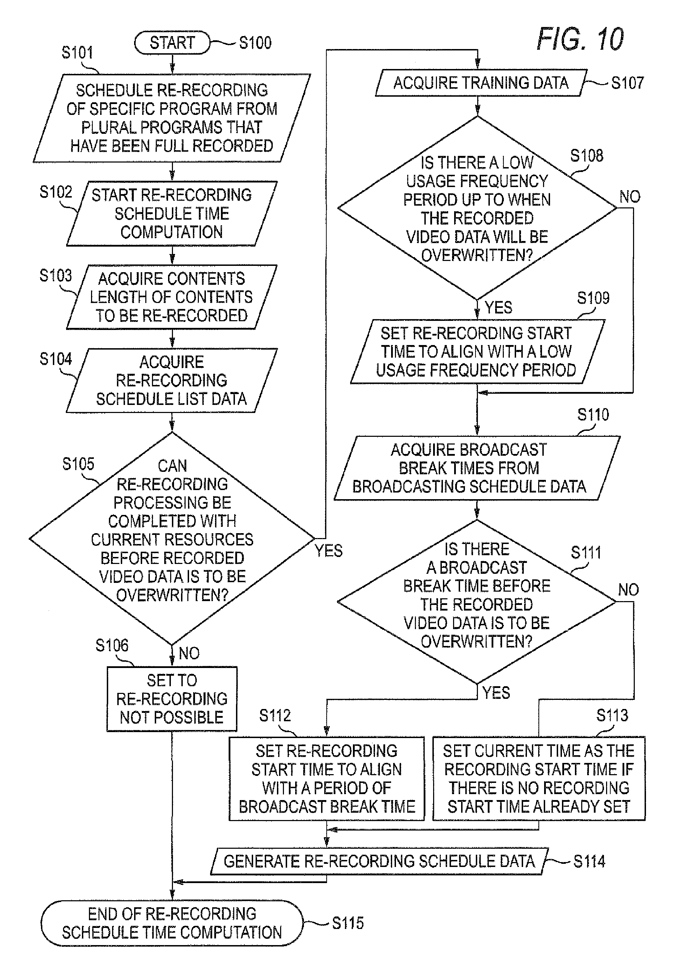

FIG. 10 is a flow chart showing a process for re-recording schedule time computation, according to the recorder of the exemplary embodiment.

In the exemplary embodiment, re-recording is set as impossible when re-recording cannot be completed even if re-recording were to be started immediately.

In other cases, the timing of load on the image recording apparatus 10 is forecast and re-recording schedule data is generated such that periods when with a lot of spare resource are prioritized, and items in the schedule do not overlap.

When the step is started (at step S100), processing then proceeds to step S101.

At step S101, re-recording of a specific program is scheduled from plural programs full recorded. Processing then proceeds to step S102.

At step 102, computation of the re-recording schedule time is commenced. Processing then proceeds to step S103.

At step S103, the contents length of the contents to be re-recorded is acquired. Processing then proceeds to step S104.

At step S104, re-recording schedule list data is acquired. Processing then proceeds to step S105.

At step S105, it is determined whether or not re-recording processing can be completed with the current resources before the recorded video data is to be overwritten. Processing then proceeds to step S107 when determined that re-recording processing can be completed with the current resources before the recorded video data is to be overwritten (Yes at step S105). Processing proceeds to step S106 when determined that re-recording processing cannot be completed with the current resources before the recorded video data is overwritten (No at step S105).

At step S106, scheduling re-recording is set to not possible. Processing then proceeds to step S115.

At step S107, learning data is acquired. Processing then proceeds to step S108.

At step S108, it is determined whether or not there is a period up to when the recorded video data will be overwritten when usage frequency of the recorder is low. Processing proceeds to step S109 when determined that there is a period when usage frequency of the recorder is low (Yes at step S108). Processing proceeds to step S110 when determined that there is no period when usage frequency of the recorder is low (No at step S108).

At step S109, the scheduled re-recording start time is set to align with a period of low usage frequency of the recorder 10. Processing then proceeds to step S110.

At step S110, broadcast break times are acquired from broadcasting schedule data such as an electronic program guide (EPG). Processing then proceeds to step S111.

At step S111, it is determined whether or not there is a broadcast break time before the recorded video data is to be overwritten. Processing proceeds to step S112 when determined that there will be a broadcast break time before the recorded video data is to be overwritten (Yes at step S111). Processing proceeds to step S113 when determined that there will not be a broadcast break time before the recorded video data is to be overwritten (No at step S111).

At step S 112, the scheduled re-recording start time is set so as to align with the broadcast break time. Processing then proceeds to step S114.

At step S113, the current time is set as the recording start time if there is no recording start time already set. Processing then proceeds to step S114. Re-recording schedule data is generated at Step 114. Processing then proceeds to step S115.

Step S115 is the final step of re-recording schedule time computation and processing is ended.

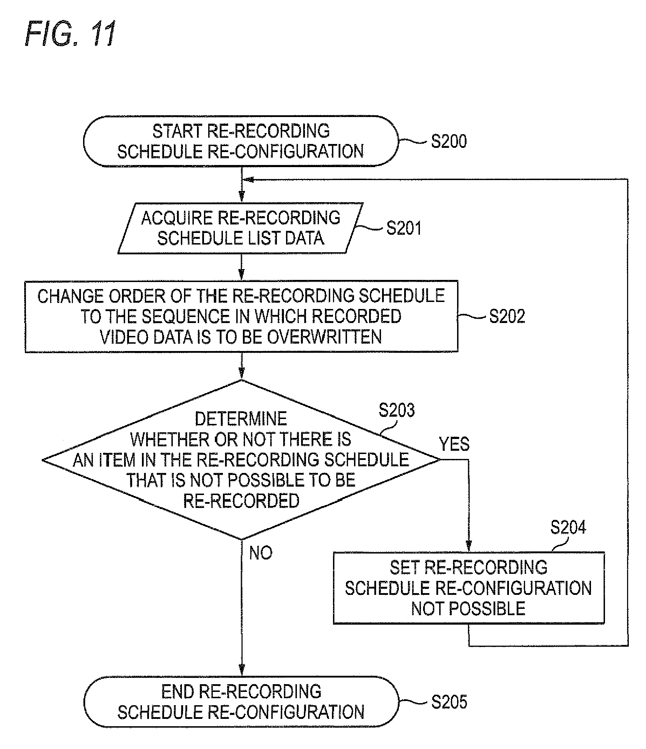

FIG. 11 is a flow chart showing an algorithm for re-configuration of re-recording schedule for anticipated change in the load on the recorder, according to the recorder of the exemplary embodiment.

In the exemplary embodiment, for example, setting is made such that the re-recording is performed in the sequence with which the recorded video data is to be erased.

When re-recording schedule re-configuration is started (at step S200), processing then proceeds to step S201.

Re-recording schedule list data is acquired at Step S201. Processing then proceeds to step S202.

At step S202, the order of the re-recording schedule is changed to the sequence in which recorded video data is to be overwritten. Processing then proceeds to step S203.

At step S203, it is determined whether or not there is an item in the re-recording schedule that is not possible to be re-recorded. Processing proceeds to step S204 when determined that there is an item present that it is not possible to re-record (Yes at step S203). Processing proceeds to step S205 when determined that there is no item present that is not possible to re-record (No at step S203).

Re-recording schedule re-configuration not possible is set at step S204. Processing then returns to step S201 and the above processing is repeated.

At step S205, re-configuration of the re-recording schedule is ended.

In the exemplary embodiment, re-recording execution is made possible without a user being made aware of the actual processing time for the above re-recording for the contents. It is therefore possible to increase ease-of-use to a user.

There is no limitation to the description above, and when putting into practice various modifications are possible within a scope not departing from the spirit of the embodiments described herein.

## Claims

1. A recorder for recording broadcast programs, comprising:
a first video recording module configured to simultaneously receive video signals of a plurality of broadcast programs, and to continuously record the video signals on a recording medium;
a second video recording module configured to extract a designated specific program from the plurality of broadcast programs based on a schedule, and to re-record the specific program on the recording medium; and
a load forecasting module configured to forecast a timing of load of an operation of the recorder,
wherein re-recording of the specific program is performed based on the forecasted load timing of the recorder.

2. The recorder of claim 1, wherein the load is forecasted based on user usage frequency.

3. The recorder of claim 1 or 2, wherein the load is forecasted based on a broadcasting break time.

4. The recorder of one of claims 1 to 3 further comprising:
a overwrite forecasting module configured to forecast a timing when a next video signal is overwritten to the recording medium during continuous recording of video signals of the broadcast programs, and to output the forecast overwrite timing aligned with the re-recording timing in a displayable format.

5. The recorder of one of the preceding claims, wherein timing forecast of the load is appropriately executed and timing of re-recording for the specific program is changed based on the changed timing.

6. The recorder of one of the preceding claims further comprising:
a scheduling module configured to set a schedule for extracting a designated specific program from the plurality of broadcast programs recorded on the recording medium and re-recording the specific program onto the recording medium.

7. A video display device comprising:
the recorder according to any one of claim 1 to claim 6; and a video display device configured to display a video recorded on the recording medium.

8. A recording method comprising:
simultaneously receiving video signals of a plurality of broadcast programs, and continuously recording the video signals on a recording medium;
extracting a designated specific program from the plurality of broadcast programs based on a schedule, and re-recording the specific program on the recording medium; and
forecasting a timing of load of an operation of the recorder,
wherein re-recording of the specific program is performed based on the forecasted load timing of the recorder.

9. The method of claim 8, wherein the load is forecasted based on user usage frequency.

10. The method of claim 8 or 9, wherein the load is forecasted based on a broadcasting break time.
